(19) Europäisches Patentamt
European Patent Office
Office européen des brevets

(11) EP 0 560 260 B1

(12) EUROPEAN PATENT SPECIFICATION

(45) Date of publication and mention
of the grant of the patent:
20.05.1998 Bulletin 1998/21

(51) Int Cl.⁶: G06K 11/14

(21) Application number: 93103689.1

(22) Date of filing: 08.03.1993

(54) **An input device and a method of inputting data**

Eingabegerät und Verfahren zur Dateneingabe

Dispositif d'entrée et procédé d'entrée de données

(84) Designated Contracting States:
DE FR GB

(30) Priority: 09.03.1992 JP 50093/92

(43) Date of publication of application:
15.09.1993 Bulletin 1993/37

(73) Proprietor: SHARP KABUSHIKI KAISHA
Osaka-shi, Osaka-fu 545 (JP)

(72) Inventors:
• **Soda, Kazunori**
  **Nara-shi, Nara-ken (JP)**
• **Ishikawa,Tomiyuki**
  **Yamatokoriyama-shi Nara-Ken (JP)**
• **Iwasa, Kazunori**
  **Yamatokoriyama-shi, Nara-ken (JP)**
• **Okano, Tokiyuki**
  **Yamatokoriyama-shi, Nara-ken (JP)**

(74) Representative: **Müller, Frithjof E., Dipl.-Ing.**
**Patentanwälte**
**MÜLLER & HOFFMANN,**
**Innere Wiener Strasse 17**
**81667 München (DE)**

(56) References cited:
FR-A- 2 265 141          US-A- 3 692 936

• PATENT ABSTRACTS OF JAPAN vol. 014, no.
  332 (P-1077) 17 July 1990 & JP-A-21 10 619

## Description

## BACKGROUND OF THE INVENTION

1. Field of the Invention:

The present invention relates to an input device for inputting data in response to a particular point designated with an input pen or the like, and it also relates to a method using the same.

2. Description of the Related Art:

Generally, an image forming apparatus requires an input device for designating an image-reading area or an image-non-reading area.

A conventional image forming apparatus employs the following methods for the above input device.

(1) A first method is as follows: An operator previously overlaps a copying image on a lattice-scaled transparent sheet. Then, he or she reads the scales on the X-axis and Y-axis and inputs the coordinates of a particular point by the use of a ten-key key board, resulting in designating an image-reading area.

(2) A second method is as follows: An original glass plate has mark scales along the X-axis and Y-axis. The operator reads the scales on the X-axis and Y-axis and inputs the coordinates of a particular point by the use of a ten-key key board or the like, resulting in designating an image-reading area.

(3) A third method is as follows: Arrays of switches are provided along the X-axis and Y-axis of an original glass plate and are arranged in the same interval. The operator operates the switches each corresponding to one of the coordinates of a particular point, resulting in designating an image-reading area.

(4) A fourth method is as follows: A tablet constituted by a planar matrix array sensor is provided on a place other than the original glass plate, for example, on a cover covering the glass plate. The operator indicates a point on the tablet by the use of an input pen or the like, resulting in designating an image-reading area.

(5) A fifth method is as follows: A plurality of sensors for detecting a vibration are provided on the original glass plate. When the original glass plate is touched at a particular point, an input device calculates the coordinates of the point based on the difference between the times at which each of the plurality of sensors detects the vibration caused by touching, resulting in designating an image-reading area.

The first and second methods can be economically achieved, but are not efficient in operation. The third method is also inefficient in operation due to the necessity of the dual operations of the X-axis and the Y-axis. The fourth method is more efficient than the other methods but is disadvantageously costly because of the expensive matrix array sensor. In addition, the glass plate must be completely transparent and exactly flat so as to avoid erroneous readings, so a special tray or the like must be additionally used for supporting the matrix array sensor. Thus, the original must be shifted from the glass plate to the special tray.

The fifth method is much more efficient in operation but is again disadvantageously costly because of the plurality of detecting sensors. In addition, it is very difficult to mount the detecting sensors on the glass plate. Furthermore, the program for identifying the designated points on the basis of reception of signals from the touching is complicated and costly.

Prior art document US-A-3 692 936 which is used to delimit claim 1 discloses an acoustic coordinate data determination system in which a detector detects whether or not the level of an electrical signal which is output from an amplifier exceeds a threshold value. The detected level from the detector is applied through an OR element to a flipflop.

## SUMMARY OF THE INVENTION

It is an object of the present invention to provide an input device, a method of inputting data, and an apparatus for processing an image of an original in which a designated point can be detected by a single sensor, thereby improving efficiency in operation and reducing production costs.

To solve this object, the present invention provides an input device as specified in claim 1, a method of inputting data as specified in claim 5, and an apparatus for processing an image of an original as specified in claim 7.

The input device of this invention, has especially an operation panel; a plurality of vibrators for generating a vibration, each of the plurality of vibrators being disposed at different positions on the operation panel, the vibration being propagated in the operation panel; an operation section for designating a point on the operation panel and detecting the vibration propagated from each of the plurality of vibrators at the designated point; a time measuring section for measuring a first time period from the first time at which one of the plurality of vibrators generates a vibration to the second time at which the operation section detects the vibration generated at the first time, and the second time period from the third time at which another of the plurality of vibrators generates a vibration to the fourth time at which the operation section detects the vibration generated at the third time; a calculating section for calculating the position of the designated point on the basis of the first time period and the second time period; and an input section for inputting data according to the position of the designated point.

In another aspect of the present invention, a method of inputting data includes especially the steps of:

(1) generating a vibration at a plurality of sources on an operation panel, the vibration being propagated in the operation panel;
(2) designating a point on the operation panel;
(3) detecting the vibration propagated from each of the plurality of sources at the designated point;
(4) measuring a first time period from the first time at which a vibration is generated at one of the plurality of sources to the second time at which the vibration generated at the first time is detected at the designated point, and a second time period from the third time at which a vibration is generated at another one of the plurality of sources to the fourth time at which the vibration generated at the third time is detected at the designated point;
(5) calculating the position of the designated point on the basis of the first time period and the second time period; and
(6) inputting data according to the position of the designated point.

The calculating step (5) described above may further includes the steps of:

(7) calculating a first distance between one of the plurality of sources and the designated point on the basis of the first time period and the propagating speed of the operation panel;
(8) calculating a second distance between another one of the plurality of sources and the designated point on the basis of the second time period and the propagating speed of the operation panel; and
(9) calculating the coordinates of the designated point on the basis of the first distance and the second distance.

Thus, the invention described herein makes possible the advantage of providing an input device in which a designated point can be detected by a single sensor, thereby improving efficiency in operation and reducing production costs.

This and other advantages of the present invention will become apparent to those skilled in the art upon reading and understanding the following detailed description with reference to the accompanying figures.

## BRIEF DESCRIPTION OF THE DRAWINGS

Figure 1 is a top surface view showing a copying machine equipped with an input device of the present invention.

Figure 2 is a sectional view showing the structure of an input pen of the present invention.

Figure 3 is a diagram for illustrating the principle of detecting designated points according to the present invention.

Figure 4 is a block diagram used for the input device and a circuit of a copying machine according to the present invention.

Figure 5 is a flowchart showing the steps for seeking coordinates of designated points according to the present invention.

Figure 6 is a top surface view showing another copying machine equipped with an input device of the present invention.

## DESCRIPTION OF THE PREFERRED EMBODIMENTS

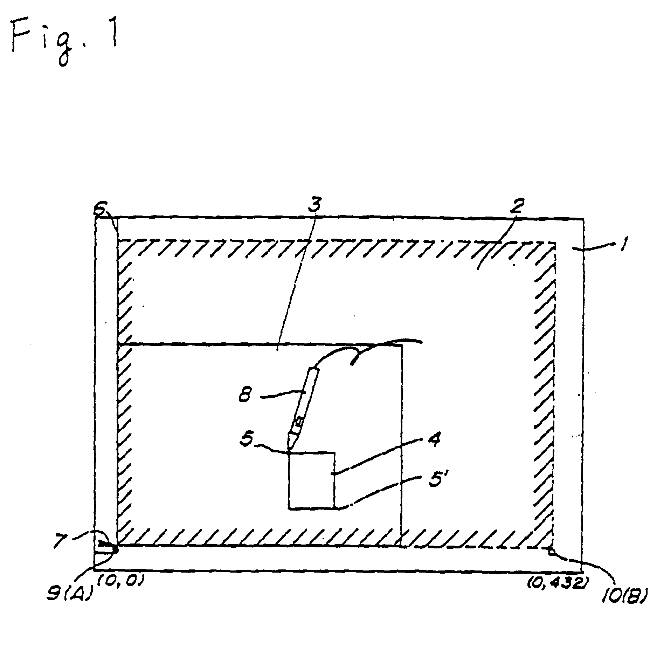

Figure 1 is a plan view showing a copying machine which has on input device of the present invention. An original glass plate of the copying machine is used as an operation plate of the input device.

Referring to Figure 1, on the top surface of the copying machine, there is provided transparent table glass 1 having a copiable area 2 in which an original 3 can be copied. If the original 3 is placed out of the copiable area 2, it cannot be copied. An area 4 having a diagonal 5 to 5' is designated as a part of the original 3. A reference line 6 is the line along which the forward end of the original 3 is placed. A reference index 7 is a particular point for placing the original 3. For example, the reference index 7 indicates the lowest line for forming an image.

In this example, two vibrators 9 and 10 for generating a vibration are provided at two adjacent corners of the table glass 1. However, the number of the vibrators is not limited to only two, and a plurality of vibrators may be provided on the table glass 1. The vibrators 9 and 10 are mounted onto the top surface or the back surface of the table glass 1. The vibrations generated by the vibrators 9 and 10 are propagated in the table glass 1. When an input pen 8 designates a point on the table glass 1, the input pen 8 detects the vibration propagated from the vibrators 9 and 10 at the designated point.

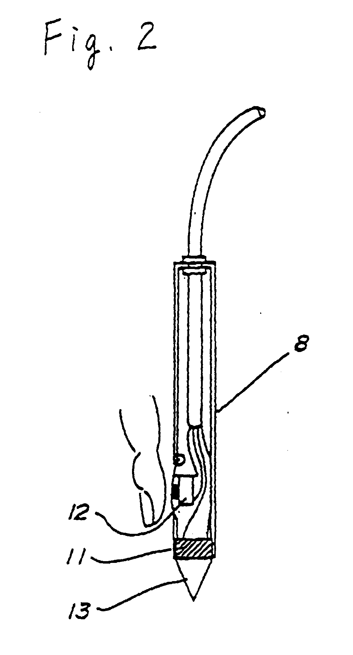

As shown in Figure 2, the input pen 8 has a sensor 11 for detecting the vibration propagated from the vibrators 9 and 10, an operation switch 12 for determining the timing for detecting the propagated vibration, and a transmission portion 13 for transmitting the vibration in the table glass 1 at the designated point into the sensor 11. The transmission portion 13 is made of metal or the like and has a cone shape so that the edge of the cone shape can touch the table glass 1 at a single point. Signal lines for transmitting signals from the sensor 11 and the operation switch 12 are integrated and connected to an input device body. Alternatively, the signal lines may be connected to a control section of the copying machine.

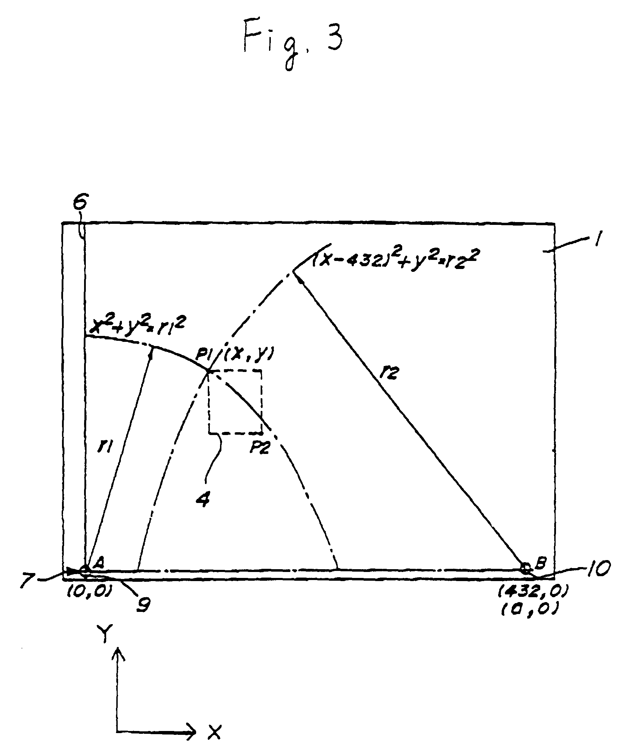

Next, referring to Figure 3, the principal for detecting the coordinates of a particular point designated by the input pen 8 on the table glass 1 will be described. The coordinates of the point P1 (x, y) designated by the input pen 8 are obtained from a point of intersection between a first circle and a second circle. The first circle has a radius $r_1$ and a center as the vibrator 9. The second circle has a radius $r_2$ and a center as the vibrator 10.

For simplicity, it is assumed that the X-axis and the Y-axis are defined as shown in Figure 3, the vibrator 9 is disposed at a point A having coordinates (0, 0) and the vibrator 10 is disposed at a point B having coordinates (432, 0). For example, in the case where the size of the copiable area 2 on the table glass 1 is 297 mm x 432 mm, and if the vibrator 9 is disposed at the reference index 7 on the reference line 6 and the vibrator 10 is disposed at the right end of the copiable area 2 on the X-axis, then the vibrator 9 has coordinates (0, 0) and the vibrator 10 has coordinates (432, 0), wherein the unit of numerals is millimeters.

The propagating speed of vibration in the table glass 1 depends upon the material and the manufacturing method of the table glass 1, normally 3000 to 4500 m/sec. For example, when the table glass 1 is made of soda glass, the speed is approximately 4300 m/sec. It is assumed that the vibration transmission time T1 is defined as the time period from the time at which the vibrator 9 generates a vibration at the point A to the time at which the input pen 8 detects the vibration at the point P1, and the vibration transmission time T2 is defined as the time period from the time at which the vibrator 10 generates another vibration at the point B to the time at which the input pen 8 detects the vibration at the point P1. If the vibration transmission times T1 and T2 are measured, then the distance from the point A to the point P1 (i.e. the radius $r_1$) and the distance from the point B to the point P1 (i.e. the radius $r_2$) are calculated from the measured result and the propagating speed of the table glass 1.

More specifically, the radius $r_1$ can be calculated by multiplying the time T1 by the propagating speed v of the table glass 1 (i.e. $r_1 = v \times T1$), and the radius $r_2$ can be calculated by multiplying the time T2 by the propagating speed v of the table glass 1 (i.e. $r_2 = v \times T2$).

Generally, a circle is represented by the following equation:

$$(x - a)^2 + (y - b)^2 = r^2,$$

wherein a and b are denoted as the center coordinates (a, b), and r denotes the radius of the circle.

Accordingly, the circle having the center (0, 0) of the point A and the radius $r_1$ and the circle having the center (432, 0) of the point B and the radius $r_2$ are represented by the following equations:

$$r_1{}^2 = x^2 + y^2 \qquad (1)$$

$$r_2{}^2 = (x - 432)^2 + y^2 \qquad (2)$$

The point P1 is the point of intersection between the circle represented by the equation (1) and the circle represented by the equation (2). Therefore, solving the simultaneous equations (1) and (2) determines the coordinates (x, y) of the point P1 as follows:

$$x = (432^2 + r_1{}^2 - r_2{}^2)/(2 \times 432) \qquad (3)$$

$$y = \pm \sqrt{r_1{}^2 - x^2} \qquad (4)$$

The positive value of the y coordinates obtained by the equation (4) is used as the y coordinate value of the point P1 designated by the input pen 8. The negative value thereof is ignored because the value is out of the copiable area 2 of the table glass 1.

Thus, the coordinates (x, y) of the point P1 designated by the input pen 8 can be calculated based on the equations mentioned above. Similarly, the coordinates of the point P2 designated by the input pen 8 can also be calculated. Then, an area 4 having a diagonal P1 to P2 is specified. The area 4 is used to input data under various conditions.

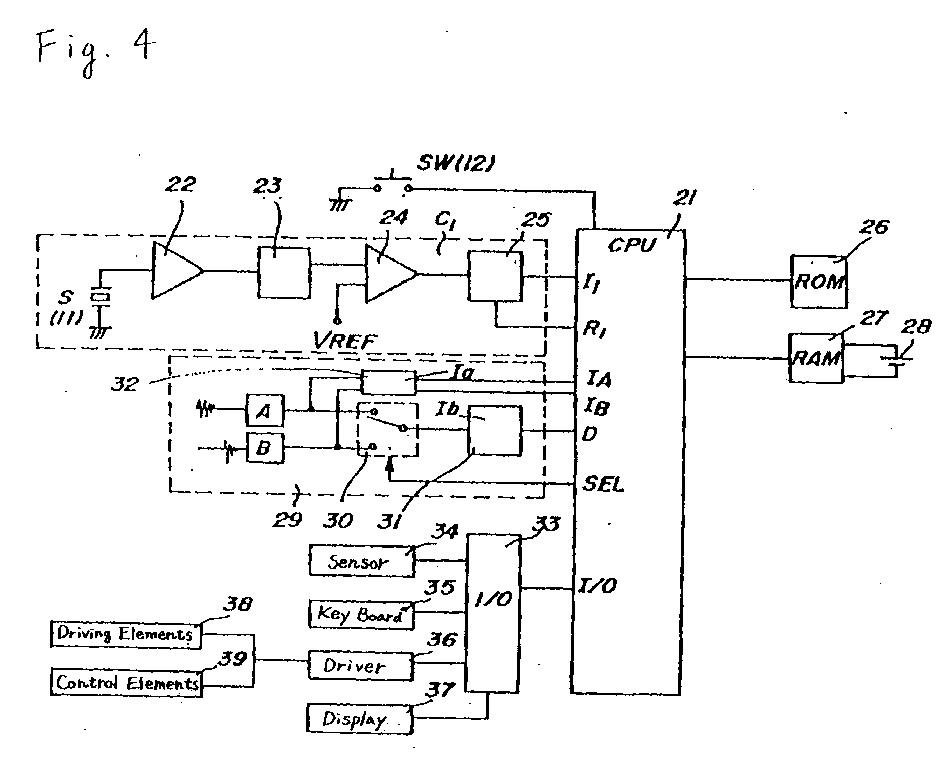

Figure 4 shows a configuration for the input device and the control circuit of the copying machine. The sensor 11 included in the input pen 8 is denoted as S. The sensor S receives vibrations propagated from the vibrator 9 and the vibrator 10 and converts the vibrations into an electrical signal. For example, a piezo sensor, strain sensor, or mini-microphone may be used as the sensor S. The sensor S constitutes a part of the detector circuit $C_1$ which includes an amplifier 22, a filter 23, a comparator 24, and a latch 25. The amplifier 22 amplifies the electrical signal from the sensor S into a signal having a predetermined magnitude. The filter 23 removes any unnecessary frequency of the amplified signal. In other words, the filter 23 only passes a signal having the frequency caused by the vibrators 9 and 10. The comparator compares the signal through the filter 23 with a predetermined voltage value $V_{REF}$, and generates a detecting signal as an effective signal $I_1$ when the signal becomes greater than the predetermined voltage value. The effective signal $I_1$ is immediately sent to the latch 25. When the latch 25 latches the effective signal $I_1$, the CPU 21 detects the timing of the latch 25. Then, the CPU 21 generates a reset signal $R_1$, thereby fixing the output of the latch **25**.

The operation switch 12 included in the input pen 8 is denoted as SW in Figure 4. The CPU 21 starts detecting the position of the point P1 when the operation switch 12 turns on. When the CPU 21 receives a signal indicating the on state of the operation switch 12, the CPU 21 generates a driving signal D for driving the vibrators 9 and 10 which are denoted as A and B, respectively. The signal oscillator 31 receives the driving signal D and generates a signal having a predetermined frequency. The vibrators A and B generate vibrations based on the signal from the signal oscillator 31 via a select switch 30, thereby causing the vibration in the table glass 1. For example, a piezo-buzzer may be used as the vibrator. The select switch 30 is a switch for electrically connecting the signal oscillator 31 to one of the vibrators A and B in accordance with a select signal SEL from the CPU 21. As a result, the signal from the signal oscillator 31 is supplied to either the vibrator A or B. The waveform shaping circuit 32 prevents a time lag from the time at which the CPU 21 outputs the driving signal D to the time at which the signal oscillator 31 outputs the signal having the predetermined frequency. Signals $I_a$ and $I_b$ generated from the waveform shaping circuit 32 are supplied to input terminals $I_A$ and $I_B$ of the CPU 21, respectively.

The CPU 21 executes the control of the copy process and the control for detecting the point P1 designated by the input pen 8 in accordance with the programs stored in the ROM 26. The ROM 26 stores various programs such as a copy control program and a position detecting program. The RAM 27 stores various information such as the timing for detection of the sensor S, the results of the arithmetic calculation for identifying the designated points, the conditions of the copying machine, and the status of the copying machine. The RAM 27 is backed up by the battery 28.

Further, the CPU 21 is also connected to an input/output port (I/O) 33 for extending the number of input/output terminals and assisting the control of input/output processes. The I/O 33 is connected to various sensors 34, a key board 35, a driver 36 for driving a plurality of driving elements 38 and a plurality of control elements 39, a display 37, and the like.

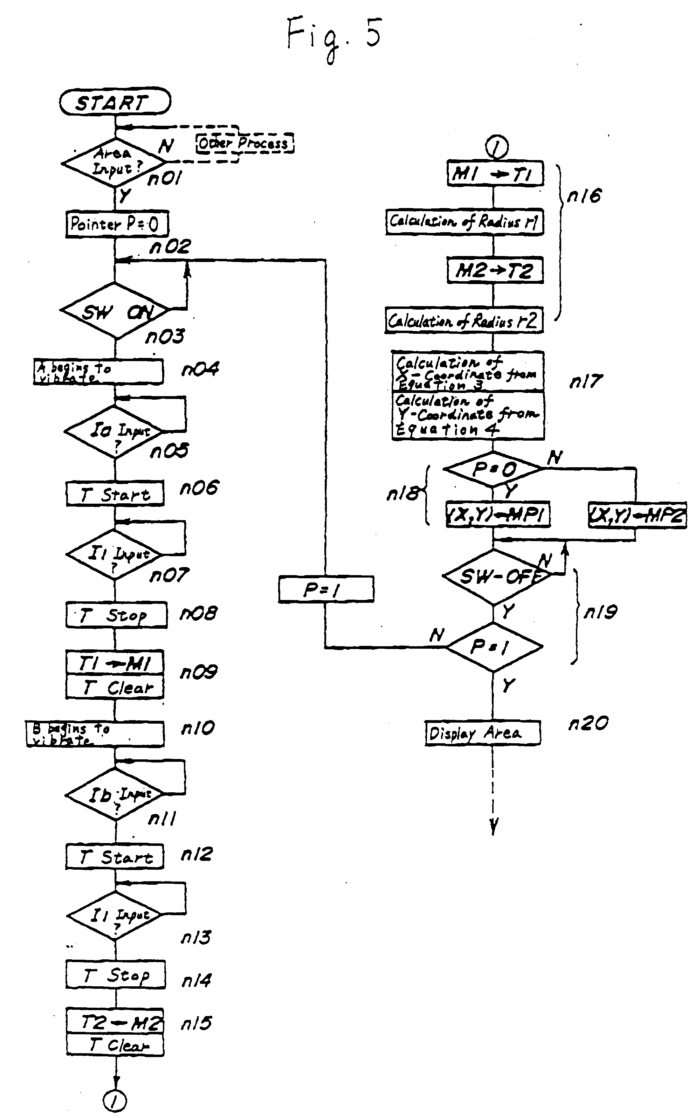

Figure 5 shows a process for specifying the coordinates of the points P1 and P2 designated by the input pen 8. First, when the power supply is turned on, the CPU 21 executes an initializing process. As a result, the contents of the RAM 27 are cleared or removed. When the machine reaches the "ready" state after the "warming-up" state, the CPU 21 begins to execute the following steps:

Step n01: The CPU 21 judges whether or not the area input mode is set. If the area input mode is set, then the process proceeds to the step n02. The area input mode is used to specify the selected area or the non-selected area for inputting date, and is set by operating the operation panel of the machine. For example, the area input mode may include a mode for specifying an area for copying (i.e. trimming mode) and a mode for specifying an area for non-copying (i.e. masking mode). If the area input mode is not set, then one of the other processes which are not shown in Figure 5 is executed. For example, when the copying conditions such as paper number, magnification, and density are input and the print switch for starting the copying operation is operated, the process proceeds to the next step of a control routine for executing the copying operation.

Step n02: The CPU 21 initially sets a pointer **p** to "0". The pointer p indicates one of the states for designating the area 4 having the diagonal P1 to P2 as shown in Figure 3. After the coordinates (x, y) of the point P1 have been calculated, the pointer p is incremented into "1". The pointer p is stored in the RAM 27.

Step n03: The CPU 21 detects the operation state of the switch 12 (SW) of the input pen 8. In order to designate a point on the table glass 1, the input pen 8 is placed at the point and the switch SW of the input pen 8 is turned on. When the CPU 21 detects the turn on state of the input pen 8, the CPU 21 starts the control operation for detecting the coordinates of the point P1.

Step n04: the vibrator A is driven to obtain the radius $r_1$ from the point A to the point P1. The CPU 21 outputs a driving signal from a terminal D. The signal oscillator 31 receives the driving signal and then begins to oscillate. The vibrator A generates a vibration in accordance with the oscillation frequency generated by the signal oscillator 31.

Step n05: The waveform shaping circuit 32 does not output an effective signal $I_a$ until the signal oscillator 31 outputs the regular signal having the predetermined oscillation frequency. The CPU 21 monitors whether or not the CPU 21 receives the effective signal $I_a$ at the terminal $I_A$.

Step n06: When the CPU 21 detects having received the effective signal $I_a$, a timer T starts the counting operation. The timer T is used to measure the time period T1 from the time at which the vibrator 9 at the point A generates a vibration to the time at which the input pen 8 at the point P1 detects the propagated vibration. When an allowable error in calculating the coordinates of the point designated by the input pen 8 is desired to be restricted within $\pm 1$ mm, the timer T counts by 0.1 $\mu$sec. For example, in the case where soda glass is used as the table glass 1, the propagating speed of vibration in the table glass 1 is 4300 m/sec, i.e., 0.23 mm/$\mu$sec, as is mentioned above. Accordingly, the count unit of 0.1 $\mu$sec of the timer T is sufficiently small enough to restrict the error within 1 mm or less.

Step n07: After the vibrator A begins to vibrate, the sensor 11 (S) of the input pen 8 detects the vibration propagated in the table glass 1. Then, a signal $I_1$ is inputted into the CPU 21.

Steps n08 and n09: When the CPU 21 receives the signal $I_1$, the timer T stops the counting operation. The content of the timer T at this time is equal to the vibration transmission time T1 from the point A to the point P1, and is stored in the memory area M1 of the RAM 27. Then, the content of the timer T is cleared.

Step n10: After measuring the vibration transmission time T1 from the point A to the point P1 as described above, the vibrator 10 at the point B is driven so as to measure a vibration transmission time T2 from the point B to the point P1. The select switch 30 is switched according to a select signal SEL from CPU 21 so as to electrically connect the signal oscillator 31 to the vibrator 10.

Steps n11 through n15: In the same manner as Steps n05 through n09, an oscillating signal generated by the signal oscillator 31 is supplied to the vibrator 10. When the waveform shaping circuit 32 outputs an effective signal $I_b$, the timer T starts the counting operation. When the sensor 11 (8) detects the vibration propagated from the vibrator 10 in the table glass 1, the timer T stops the counting operation. The content of the timer T at this time is equal to the vibration transmission time T2 from the point B to the point P1, and is stored in a memory area M2 of the RAM 27. Then, the content of the timer T is cleared.

Step n16: On the basis of the times T1 and T2 obtained as described above, the radius $r_1$ and $r_2$ are calculated. Specifically, the CPU 21 reads out the times T1 and T2 which are stored in the memory area M1 and M2 of the RAM 27, and executes the calculation of multiplying the times T1 and T2 by the propagation speed **v** of the table glass 1 so as to obtain the radius $r_1$ and $r_2$, respectively.

Step n17: Next, on the basis of the radiuses $r_1$ and $r_2$, the CPU 21 executes the calculation for obtaining the coordinate x of the point P1 according to the Equation 3. Then, on the basis of the coordinate x, the CPU 21 also executes the calculation for obtaining the coordinate y of the point P1 according to the Equation 4.

Step n18: The CPU 21 judges whether or not the content of the pointer p is equal to "0". If the content is Yes, then the coordinates (x, y) of the point P1 are stored in the memory area MP1 of the RAM 27. As a result, the coordinates of the point P1 designated by the input pen 8 are stored in the memory area MP1. If the content is No, then the coordinates (x, y) of the point P2 are stored in the memory area MP2 of the RAM 27.

Step n19: In order to obtain the coordinates of the point P2 of the input area 4, the CPU 21 judges whether the pointer p is equal to "1" after the switch SW of the input pen 8 turns off. If the content is No, then the CPU 21 sets the pointer p to "1", returns to the step n03, and executes the process for detecting the coordinates of the point P2. If the content is Yes, then the process proceeds the step n20.

Step n20: On the basis of thus obtained coordinates of points P1 and P2, the CPU 21 determines the designated area 4 shown in Figure 3 and displays the designated area 4 if desired. The designated area 4 may be displayed as well as the image forming area 2 of the table glass 1 on display devices such as a CRT and a liquid crystal display device, whereby it becomes easy for the operator to recognize the area 4. In addition, the coordinates of each corner of the area 4 may be displayed. In this case, the table glass 1 may have reference scales in millimeters along the x and y axes thereof in option, thereby it becomes easy for the operator to recognize the area 4.

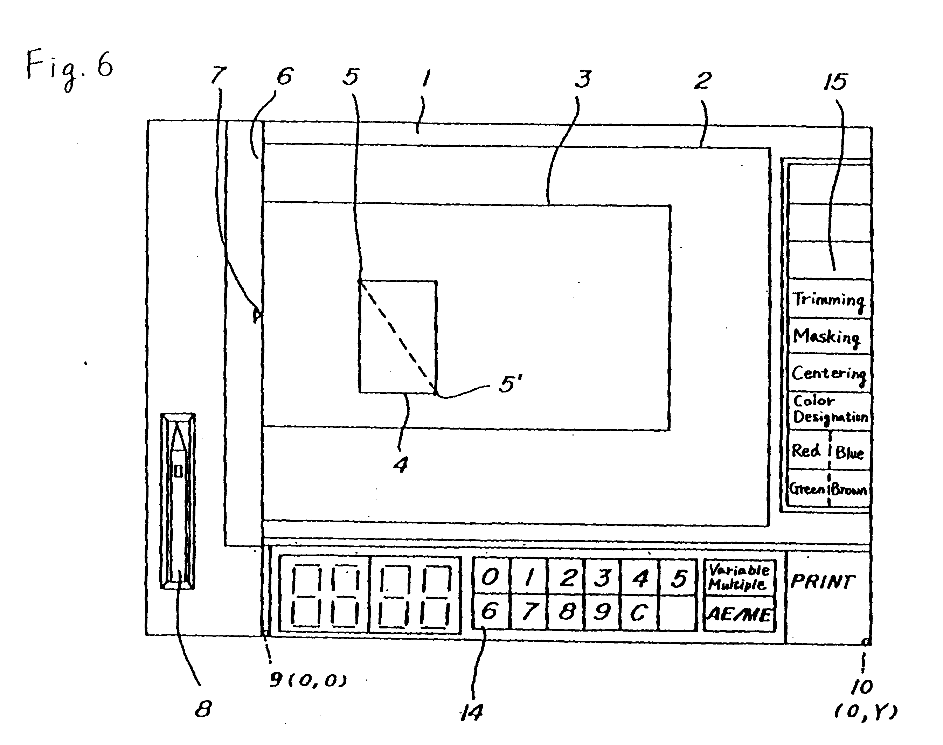

As described above, the input device of the present invention can be used as an apparatus for designating an area on the table glass 1 of the copying machine. However, the application of the present invention to the copying machine is not limited to the example mentioned above. For example, the input device of the present invention may be used to input various information 14 and 15 such as numerals 0 to 9, a magnification, a density, a trimming and a masking into the copying machine by designating items which corresponds to this information and are printed on the front surface or back surface of the table glass 1, respectively as shown in Figure 6. For example, when the item 15 for setting the trimming mode is touched by the input pen 8, the copying machine is turned to the trimming mode. Then, the area can be designated using the input pen 8.

In Figure 6, it is assumed that the original 3 is placed on the table glass 1 as a center reference, the vibrator 9 and 10 are disposed at the points (0, 0) and (0, Y) in the lower end of the table glass 1. In this case, the input device can detect the position of the point designated by the input pen 8 in the same manner as described above. Alternatively, the input device may be used to only input the items 14 and 15, and may not be used to designate the area of the original 3.

Further, the input device of the present invention can also be used as an input device for inputting letters, lines, and diagrams which are written by hand into a computer. In this case, the vibrators 9 and 10 are successively driven according to the movement of the input pen 8 on the table glass 1, and the input pen 8 detects the vibration propagated from the vibrators **9** and **10** and specifies the points designated by the input pen **8** as successive dot information. As a result, the input pen **8** can detect a trace including the points designated by the input pen **8**.

According to the input device of the present invention, the vibrators disposed at the operational panel vibrate, the vibration detecting sensor included in the operational portion detects the vibration propagated from the vibrators, and then the coordinates of the point designated by the operational portion are obtained, thereby the operator can input data based on the designated point. Since the input device requires only one vibration detecting sensor, the operability of the input device can be improved and the cost of the input device can be lowered.

In addition, since the input device requires at least two vibrators, a circuit for the calculation can be simplified. As a result, a circuit configuration and the entire structure of the input device can be simplified, which results in lowering the cost of products.

Various other modifications will be apparent to and can be readily made by those skilled in the art within the scope of the claims.

**Claims**

1. An input device comprising:

an operation panel (1);
a first vibration generating means (9) for starting to generate a vibration in response to a first control signal, said first vibration generating means (9) being disposed at a first position (A) on said operation panel (1);
a second vibration generating means (10) for starting to generate a vibration in response to a second control signal, said second vibration generating means (10) being disposed at a second position (B) which is different from said first position (A) on said operation panel (1);
a designating means (8) for designating a point (P1) on said operation panel (1),
a detecting means (11) for detecting said vibration propagated from each of said first and second vibration generating means (9, 10) at said designated point;
a control means (21),
a time measuring means (21) for measuring a first time period from a first time at which said first vibration generating means (9) generates a vibration to a second time at which said detecting means (11) detects said vibration generated at said first time, and a second time period from a third time at which said second vibration generating means (10) generates a vibration to a fourth time at which said detecting means (11) detects said vibration generated at said third time, said time measuring means (21) comprising means for confirming an effectiveness of said vibration generated by said first vibration generating means (9) at said first time and said vibration generated by said second vibration generating means (10) at said third time;
a calculating means (21) for calculating the position of said designated point (P1) on the basis of said first time period and said second time period; and
an input means for inputting data according to said position of said designated point,

characterized in that

said designating means (8) has a switch (12), said control means (21) supplies said first control signal to said first vibration generating means (9) when said switch (12) is turned on, and supplies said second control signal to said second vibration generating means (10) after said detecting means (11) detects said vibration from said first vibration generating means (9) at said designated point (P1); and

said detecting means (11) includes: a detecting section for detecting said vibration propagated from each of said first and second vibration generating means (9, 10) and for outputting a detection signal which indicates that said vibration is detected, and a filter section (23), connected to said detecting section, for substantially removing a vibration which has a frequency different from a predetermined frequency.

2. An input device according to claim 1, wherein said input device is incorporated in a copying machine; wherein said operation panel (1) is a transparent table of said copying machine, said operation panel (1) being divided into a first region on which an original to be copied is disposed and a second region which is used for inputting a plurality of copying conditions.

3. An input device according to claim 2, wherein said copying machine processes an image of said original disposed on said first region of said operation panel (1), said second region of said operation panel (1) being used for inputting a plurality of processing conditions, and wherein said calculated position of said designated point (P1) is used for defining an area of the image to be processed when said designated point (P1) is in said first region, and is used for inputting said plurality of copying conditions and said plurality of processing conditions when said designated point is in said second region.

4. An input device according to claim 3, wherein said plurality of copying conditions include at least a density of the copied image and a magnification of the copied image.

5. A method of inputting data comprising the steps of:

(1) designating a point (P1) on an operation panel (11) by the use of a designating means (8) having a switch (12);
(2) generating a first control signal when said switch (12) is turned on;
(3) starting to generate a vibration in response to said first control signal at a first source (9) on said operation panel (1);
(4) detecting said vibration propagated from said first source (9) at said designated point (P1) after confirming an effectiveness of said vibration;
(5) generating a second control signal after said vibration from said first source (9) is detected at said designated point (P1);
(6) starting to generate a vibration in response to said second control signal at a second source (10) on said operation panel (1);
(7) detecting said vibration propagated from said second source (10) at said designated point (P1) after confirming an effectiveness of said vibration from said second source (10);

(8) measuring a first time period from the first time at which a vibration is generated at said first source (9) to the second time at which said vibration generated at said first time is detected at said designated point (P1), and a second time period from the third time at which a vibration is generated at said second source (10) to the fourth time at which said vibration generated at said third time is detected at said designated point (P1);

(9) calculating the position of said designated point (P1) on the basis of said first time period and said second time period; and

(10) inputting data according to said position of said designated point,

wherein each of said detecting steps (4) and (7) comprises the steps of: detecting said vibration propagated from each of said first and second sources (9, 10), outputting a detection signal which indicates that said vibration is detected, and removing a vibration which has a frequency different from a predetermined frequency.

6. The method according to claim 5, wherein said calculating step (9) further comprises the steps of:

(11) calculating a first distance between said first source (9) and said designated point (P1) on the basis of said a first time period and the propagating speed of said operation panel (1);

(12) calculating a second distance between said second source (10) and said designated point (P1) on the basis of said second time period and the propagating speed of said operation panel (1); and

(13) calculating the coordinates of said designated point (P1) on the basis of said first distance and said second distance.

7. An apparatus for processing an image of an original, comprising:

an operation panel (1) on which the original is disposed;

a first vibration generator (9), disposed on the operation panel (1), for starting to generate a vibration in response to a first control signal;

a second vibration generator (10) for starting to generate a vibration in response to a second control signal, the second vibration generator (10) being disposed at a position on the operation panel (1) different from a position where the first vibration generator (9) is located;

an inputting means (8) for inputting a point on the operation panel, the inputting means including a detecting means (11) for detecting the vibration propagated from each of the first and second vibration generators (9, 10);

a control means (21),

a time measuring means (21) for measuring a first time period from a first time at which the first vibration generator (9) generates a vibration and a second time at which the vibration generated at the first time by the first vibration generator (9) is detected, and a second time period from a third time at which the second vibration generator (10) generates a vibration and a fourth time at which the vibration generated at the third time by the second vibration generator (10) is detected,

a calculating means (21) for obtaining coordinate values of the inputted point based on the first time period and the second time period, and

a processing means (21) for processing an area of the image of the original, the area defined in accordance with the coordinate values of the inputted point on the operation panel,

wherein the control means includes a means for confirming the effectiveness of the vibration which is propagated from the first vibration generator (9) to the detecting means (11), and controls the time measuring means (21) to start to measure the first time period after the effectiveness of the vibration is confirmed, wherein:

said inputting means (8) includes a switch (12), said control means (21) supplies the first control signal to the first vibration generator (9) when the switch (12) is turned on, and supplies the second control signal to the second vibration generator (10) after the detecting means (11) detects the vibration from the first vibration generator (9); and

said detecting means (11) includes: a detecting section to detecting said vibration propagated from each of said first and second vibration generators (9, 10) and for outputting a detection signal which indicates that said vibration is detected, and a filter section (23), connected to said detecting section, for substantially removing a vibration which has a frequency different from a predetermined frequency.

8. An apparatus according to claim 7, wherein the operation panel (1) is a table of a transparent glass, and the image of the original to be processed is inputted to the processing means (21) by using light which is directed to and is reflected by the original.

9. An apparatus according to claim 7 or 8, wherein the area of the image to be processed is defined by inputting a plurality of points on the operation panel (1), the plurality of points corresponding to points contained in the area.

10. An apparatus according to claim 9, wherein the operation panel (1) includes a first region on which the original is disposed and a second region which is used for inputting a plurality of processing conditions by designating a point, the area of the image to be processed is defined by the inputted point when the inputted point belongs to the first region, and one of the plurality of processing conditions which is selected in accordance with the coordinate values of the inputted point, is inputted, when the inputted point belongs to the second region.

11. An apparatus according to claim 10, wherein the second region of the operation panel (1) is a peripheral region thereof, and the second region is divided into a plurality of minor regions, each of which is assigned to one condition selected of the plurality of copying conditions and the plurality of processing conditions.

12. An apparatus according to claim 11, wherein the operation panel (1) has a rectangular shape and has four corners, the first vibration generator (9) and the second vibration generator (10) being disposed at two different corners of the four corners, and both the first vibration generator (9) and the second vibration generator (10) being arranged on one side.

13. An apparatus according to claim 12, wherein the one side on which the first vibration generator (9) and the second vibration generator (10) are arranged is adjacent only to the second region.

14. An apparatus according to claim 13, wherein a position at which the first vibration generator (9) is disposed is an origin of the coordinates.

**Patentansprüche**

1. Eingabevorrichtung mit:

   einer Betriebstafel (1),

   einer ersten Vibrationserzeugungseinrichtung (19) zum Starten des Erzeugens einer Vibration abhängig von einem ersten Steuersignal, wobei die erste Vibrationserzeugungseinrichtung (9) in einer ersten Position (A) auf der Betriebstafel (1) angeordnet ist,

   einer zweiten Vibrationserzeugungseinrichtung (10) zum Starten des Erzeugens einer Vibration abhängig von einem zweiten Steuersignal, wobei die zweite Vibrationserzeugungseinrichtung (10) in einer zweiten Position (B), die von der ersten Position (A) verschieden ist, auf der Betriebstafel (1) angeordnet ist,

   einer Bezeichnungseinrichtung (8) zum Bezeichnen eines Punktes (P1) auf der Betriebstafel (1),

   einer Detektoreinrichtung (11) zum Erfassen der von jeder der ersten und zweiten Vibrationserzeugungseinrichtungen (9, 10) an dem bezeichneten Punkt ausgebreiteten Vibration,

   einer Steuereinrichtung (21),

   einer Zeitmeßeinrichtung (21) zum Messen einer ersten Zeitdauer von einer ersten Zeit, zu welcher die erste Vibrationserzeugungseinrichtung (9) eine Vibration erzeugt, bis zu einer zweiten Zeit, zu welcher die Detektoreinrichtung (11) die zu der ersten Zeit erzeugte Vibration erfaßt, und einer zweiten Zeitdauer von einer dritten Zeit, zu welcher die zweite Vibrationserzeugungseinrichtung (10) eine Vibration erzeugt, bis zu einer vierten Zeit, zu welcher die Detektoreinrichtung (11) die zu der dritten Zeit erfolgte Vibration erfaßt, wobei die Zeitmeßeinrichtung (21) eine Einrichtung aufweist, um eine Wirksamkeit der durch die erste Vibrationserzeugungseinrichtung (9) zu der ersten Zeit erzeugten Schwingung und der durch die zweite Vibrationserzeugungseinrichtung (10) zu der dritten Zeit erzeugten Schwingung umfaßt,

   einer Recheneinrichtung (21) zum Berechnen der Position des bezeichneten Punktes (P1) auf der Grundlage der ersten Zeitdauer und der zweiten Zeitdauer, und

   einer Eingabeeinrichtung zum Eingeben von Daten gemäß der Position des bezeichneten Punktes,

dadurch gekennzeichnet, daß

   die Bezeichnungseinrichtung (8) einen Schalter (12) hat,

   die Steuereinrichtung (21) das erste Steuersignal zu der ersten Vibrationserzeugungseinrichtung (9) speist, wenn der Schalter (12) eingeschaltet ist, und das zweite Steuersignal zu der zweiten Vibrationserzeugungseinrichtung (10) liefert, nachdem die Detektoreinrichtung (11) die Vibration von der ersten Vibrationserzeugungseinrichtung (9) an dem bezeichneten Punkt (P1) erfaßt, und

die Detektoreinrichtung (11) umfaßt: einen Detektorabschnitt zum Erfassen der von jeder der ersten und zweiten Vibrationserzeugungseinrichtungen (9, 10) ausgebreiteten Vibration und zum Ausgeben eines Erfassungssignales, das anzeigt, daß die Vibration erfaßt ist, und einen mit dem Detektorabschnitt verbundenen Filterabschnitt (23), um im wesentlichen eine Vibration zu entfernen, die eine von einer vorbestimmten Frequenz verschiedene Frequenz hat.

2. Eingabevorrichtung nach Anspruch 1, bei der die Eingabevorrichtung in einem Kopiergerät enthalten ist, wobei die Betriebstafel (1) ein transparentes Feld des Kopiergerätes ist, die Betriebstafel (1) in eine erste Region, auf welcher eine zu kopierende Vorlage angeordnet ist, und eine zweite Region, die zum Eingeben einer Vielzahl von Kopierbedingungen verwendet wird, unterteilt ist.

3. Eingabevorrichtung nach Anspruch 2, bei der das Kopiergerät ein Bild einer auf der ersten Region der Betriebstafel (1) angeordneten Vorlage verarbeitet, wobei die zweite Region der Betriebstafel (1) zum Eingeben einer Vielzahl von Verarbeitungsbedingungen verwendet wird, und bei der die berechnete Position des bezeichneten Punktes (P1) zum Definieren eines Bereiches des zu verarbeitenden Bildes verwendet wird, wenn der bezeichnete Punkt (P1) in der ersten Region ist, und zum Eingeben der Vielzahl von Kopierbedingungen und der Vielzahl von Verarbeitungsbedingungen verwendet wird, wenn der bezeichnete Punkt in der zweiten Region ist.

4. Eingabevorrichtung nach Anspruch 3, bei der die Vielzahl von Kopierbedingungen wenigstens eine Dichte des kopierten Bildes und eine Vergrößerung des kopierten Bildes umfassen.

5. Verfahren zum Eingeben von Daten mit den folgenden Schritten:

(1) Bezeichnen eines Punktes (P1) auf einer Betriebstafel (11) mittels einer Bezeichnungseinrichtung (8) mit einem Schalter (12);

(2) Erzeugen eines ersten Steuersignales, wenn der Schalter (12) eingeschaltet ist;

(3) Starten des Erzeugens einer Vibration abhängig von dem ersten Steuersignal bei einer ersten Quelle (9) auf der Betriebstafel (1);

(4) Erfassen der von der ersten Quelle (9) ausgebreiteten Vibration bei dem bezeichneten Punkt (P1) nach Bestätigen einer Wirksamkeit der Vibration;

(5) Erzeugen eines zweiten Steuersignales, nachdem die Vibration von der ersten Quelle (9) an dem bezeichneten Punkt (P1) erfaßt ist;

(6) Starten des Erzeugens einer Vibration abhängig von dem zweiten Steuersignal an einer zweiten Quelle (10) auf der Betriebstafel (1);

(7) Erfassen der von der zweiten Quelle (10) ausgebreiteten Vibration bei dem bezeichneten Punkt (P1) nach Bestätigen einer Wirksamkeit der Vibration von der zweiten Quelle (10);

(8) Messen einer ersten Zeitdauer von der ersten Zeit, zu der eine Vibration bei der ersten Quelle (9) erzeugt ist, bis zu der zweiten Zeit, zu der die zu der ersten Zeit erzeugte Vibration bei dem bezeichneten Punkt (P1) erfaßt wird, und einer zweiten Zeitdauer von der dritten Zeit, zu der eine Vibration bei der zweiten Quelle (10) erzeugt ist, bis zu der vierten Zeit, zu der die zu der dritten Zeit erzeugte Vibration bei dem bezeichneten Punkt (P1) erfaßt wird;

(9) Berechnen der Position des bezeichneten Punktes (P1) auf der Grundlage der ersten Zeitdauer und der zweiten Zeitdauer; und

(10) Eingeben von Daten gemäß der Position des bezeichneten Punktes,

wobei jeder der Erfassungsschritte (4) und (7) die folgenden Schritte aufweist: Erfassen der von jeder der ersten und zweiten Quellen (9, 10) ausgebreiteten Vibration, Ausgeben eines Erfassungssignales, das anzeigt, daß die Vibration erfaßt ist, und Entfernen einer Vibration, die eine von einer vorbestimmten Frequenz verschiedene Frequenz hat.

6. Verfahren nach Anspruch 5, bei dem der Berechnungsschritt (9) die folgenden Schritte aufweist:

(11) Berechnen einer ersten Entfernung zwischen der ersten Quelle (9) und dem bezeichneten Punkt (P1) auf der Grundlage der ersten Zeitdauer und der Ausbreitungsgeschwindigkeit der Betriebstafel (1);

(12) Berechnen einer zweiten Entfernung zwischen der zweiten Quelle (10) und dem bezeichneten Punkt (P1) auf der Grundlage der zweiten Zeitdauer und der Ausbreitungsgeschwindigung der Betriebstafel (1); und

(13) Berechnen der Koordinaten des bezeichneten Punktes (P1) auf der Grundlage der ersten Entfernung und der zweiten Entfernung.

7. Gerät zum Verarbeiten eines Bildes einer Vorlage, mit:

einer Betriebstafel (1), auf der die Vorlage angeordnet ist,

einem ersten Vibrationsgenerator (9), der auf der Betriebstafel (1) angeordnet ist, um ein Erzeugen einer Vibration abhängig von einem ersten Steuersignal zu starten,

einem zweiten Vibrationsgenerator (10) zum Starten des Erzeugens einer Vibration abhängig von einem zweiten Steuersignal, wobei der zweite Vibrationsgenerator (10) an einer Position auf der Betriebstafel (1) angeordnet ist, die von einer Position verschieden ist, an der der erste Vibrationsgenerator (9) angeordnet ist,

einer Eingabeeinrichtung (8) zum Eingeben eines Punktes auf der Betriebstafel, wobei die Eingabeeinrichtung eine Detektoreinrichtung (11) zum Erfassen der Vibration umfaßt, die von jedem der ersten und zweiten Vibrationsgeneratoren (9, 10) ausgebreitet ist,

einer Steuereinrichtung (21),

einer Zeitmeßeinrichtung (21) zum Messen einer ersten Zeitdauer von einer ersten Zeit, zu welcher der erste Vibrationsgenerator (9) eine Vibration erzeugt, und einer zweiten Zeit, zu welcher die zu der ersten Zeit erzeugte Vibration durch den ersten Vibrationsgenerator (9) erfaßt wird, und einer zweiten Zeitdauer von einer dritten Zeit, zu welcher der zweite Vibrationsgenerator (10) eine Vibration erzeugt, und einer vierten Zeit, zu welcher die zu der dritten Zeit erzeugte Vibration durch den zweiten Vibrationsgenerator (10) erfaßt wird,

einer Recheneinrichtung (21) zum Gewinnen von Koordinatenwerten des eingegebenen Punktes aufgrund der ersten Zeitdauer und der zweiten Zeitdauer, und

einer Verarbeitungseinrichtung (21) zum Verarbeiten eines Bereiches des Bildes der Vorlage, wobei der Bereich gemäß den Koordinatenwerten des eingegebenen Punktes auf der Betriebstafel definiert ist,

wobei die Steuereinrichtung eine Einrichtung zum Bestätigen der Wirksamkeit der Vibration, die von dem ersten Vibrationsgenerator (9) zu der Detektoreinrichtung (11) ausgebreitet ist, aufweist und die Zeitmeßeinrichtung (21) steuert, um das Messen der ersten Zeitdauer zu beginnen, nachdem die Wirksamkeit der Vibration bestätigt ist, wobei:

die Eingabeeinrichtung (8) einen Schalter (12) umfaßt,

die Steuereinrichtung (21) das erste Steuersignal zu dem ersten Vibrationsgenerator (9) speist, wenn der Schalter (12) eingeschaltet ist, und das zweite Steuersignal zu dem zweiten Vibrationsgenerator (10) liefert, nachdem die Detektoreinrichtung (11) die Vibration von dem ersten Vibrationsgenerator (9) erfaßt, und

die Detektoreinrichtung (11) aufweist: einen Detektorabschnitt zum Erfassen der von jedem der ersten und zweiten Vibrationsgeneratoren (9, 10) ausgebreiteten Vibration und zum Ausgeben eines Erfassungssignales, das anzeigt, daß die Vibration erfaßt ist, und einen Filterabschnitt (23), der mit dem Detektorabschnitt verbunden ist, um im wesentlichen eine Vibration zu entfernen, die eine Frequenz hat, die von einer vorbestimmten Frequenz verschieden ist.

8. Gerät nach Anspruch 7, bei dem die Betriebstafel (1) ein Feld eines transparenten Glases ist, und bei dem das Bild der zu verarbeitenden Vorlage in die Verarbeitungseinrichtung (21) mittels Lichtes eingebbar ist, das auf die Vorlage gerichtet und durch diese reflektiert ist.

9. Gerät nach Anspruch 7 oder 8, bei dem der Bereich des zu verarbeitenden Bildes durch Eingeben einer Vielzahl von Punkten auf der Betriebstafel (1) definiert ist, wobei die Vielzahl von Punkten in dem Bereich enthaltenen Punkten entsprechen.

10. Gerät nach Anspruch 9, bei dem die Betriebstafel (1) aufweist: eine erste Region, auf der die Vorlage angeordnet ist, und eine zweite Region, die zum Eingeben einer Vielzahl von Verarbeitungsbedingungen durch Bezeichnen eines Punktes verwendet wird, wobei der Bereich des zu verarbeitenden Bildes durch den eingegebenen Punkt definiert wird, wenn der eingegebene Punkt zu der ersten Region gehört, und wobei eine der Vielzahl von Verarbeitungsbedingungen, die gemäß den Koordinatenwerten des eingegebenen Punktes gewählt ist, eingebbar ist, wenn der eingegebene Punkt zu der zweiten Region gehört.

11. Gerät nach Anspruch 10, bei dem die zweite Region der Betriebstafel (1) eine Randregion hiervon ist, und bei dem die zweite Region in eine Vielzahl von Unterregionen unterteilt ist, deren jede einer Bedingung zugeordnet ist, die aus der Vielzahl von Kopierbedingungen in der Vielzahl von Verarbeitungsbedingungen gewählt ist.

12. Gerät nach Anspruch 11, bei dem die Betriebstafel (1) eine rechteckförmige Gestalt hat und vier Ecken aufweist, der erste Vibrationsgenerator (9) und der zweite Vibrationsgenerator (10) an zwei verschiedenen Ecken der vier Ecken angeordnet sind, und der erste Vibrationsgenerator (9) sowie der zweite Vibrationsgenerator (10) beide auf einer Seite vorgesehen sind.

13. Gerät nach Anspruch 12, bei dem die eine Seite, auf der der erste Vibrationsgenerator (9) und der zweite Vibrationsgenerator (10) angeordnet sind, neben lediglich der zweiten Region gelegen ist.

14. Gerät nach Anspruch 13, bei dem eine Position, in welcher der erste Vibrationsgenerator (9) angeordnet ist, ein Koordinatenursprung ist.

## Revendications

1. Dispositif d'entrée comprenant:

un panneau de commande (1);
un premier moyen de génération de vibrations (9) servant à déclencher la génération de vibrations en réponse à un premier signal de commande, ledit premier moyen de génération de vibrations (9) étant disposé en un premier emplacement (A) sur ledit panneau de commande (1);
un second moyen de génération de vibrations (10) servant à déclencher la génération de vibrations en réponse à un second signal de commande, ledit second moyen de génération de vibrations (10) étant disposé sur ledit panneau de commande (1) en un second emplacement (B) qui est différent dudit premier emplacement (A);
un moyen de désignation (8) pour désigner un point (P1) sur ledit panneau de commande (1),
un moyen de détection (11) pour détecter lesdites vibrations propagées par chacun desdits premier et second moyens de génération de vibrations (9, 10) au niveau dudit point désigné;
un moyen de commande (21),
un moyen de mesure de temps (21) pour mesurer une première période de temps entre un premier moment auquel ledit premier moyen de génération de vibrations (9) génère des vibrations et un second moment auquel ledit moyen de détection (11) détecte lesdites vibrations générées audit premier moment, et une seconde période de temps entre un troisième moment auquel ledit second moyen de génération de vibrations (10) génère des vibrations et un quatrième moment auquel ledit moyen de détection (11) détecte lesdites vibrations générées audit troisième moment, ledit moyen de mesure de temps (21) comprenant un moyen pour confirmer l'efficacité desdites vibrations générées par ledit premier moyen de génération de vibrations (9) audit premier moment et lesdites vibrations générées par ledit second moyen de génération de vibrations (10) audit troisième moment;
un moyen de calcul (21) pour calculer la position dudit point désigné (P1) sur la base de ladite première période de temps et de ladite seconde période de temps; et
un moyen d'entrée pour entrer des données conformément à la position dudit point désigné,

    caractérisé en ce que

ledit moyen de désignation (8) comporte un commutateur (12),
ledit moyen de commande (21) fournit ledit premier signal de commande audit premier moyen de génération de vibrations (9) lorsque ledit commutateur (12) est activé, et fournit ledit second signal de commande audit second moyen de génération de vibrations (10) après la détection par ledit moyen de détection (11) desdites vibrations en provenance dudit premier moyen de génération de vibrations (9) au niveau dudit point désigné (P1); et
ledit moyen de détection (11) comprend: une section de détection pour détecter lesdites vibrations propagées par chacun desdits premier et second moyens de génération de vibrations (9, 10) et pour délivrer en sortie un signal de détection qui indique que lesdites vibrations sont détectées, et une section de filtrage (23), reliée à ladite section de détection, pour éliminer de façon sensible les vibrations qui ont une fréquence différente d'une fréquence prédéterminée.

2. Dispositif d'entrée selon la revendication 1, dans lequel ledit dispositif d'entrée est incorporé dans une machine de reproduction; dans lequel ledit panneau de commande (1) est une table transparente de ladite machine de reproduction, ledit panneau de commande (1) étant divisé en une première région sur laquelle est disposé un original à reproduire et une seconde région qui est utilisée pour entrer une multiplicité de conditions de reproduction.

3. Dispositif d'entrée selon la revendication 2, dans lequel ladite machine de reproduction traite une image dudit original disposé sur ladite première région dudit panneau de commande (1), ladite seconde région dudit panneau de commande (1) étant utilisée pour entrer une multiplicité de conditions de traitement, et dans lequel ladite position calculée dudit point désigné (P1) est utilisée pour définir une zone de l'image à traiter lorsque ledit point désigné (P1) se situe dans ladite première région, et est utilisée pour entrer ladite multiplicité de conditions de reproduction et ladite multiplicité de conditions de traitement lorsque ledit point désigné se situe dans ladite seconde région.

4. Dispositif d'entrée selon la revendication 3, dans lequel ladite multiplicité de conditions de reproduction comprend au moins la densité de l'image reproduite et l'agrandissement de l'image reproduite.

5. Procédé d'entrée de données comprenant les étapes consistant:

(1) à désigner un point (P1) sur un panneau de commande (1) à l'aide d'un moyen de désignation (8) comportant un commutateur (12);
(2) à générer un premier signal de commande lorsque ledit commutateur (12) est activé;
(3) à déclencher la génération de vibrations en réponse audit premier signal de commande au niveau d'une première source (9) sur ledit panneau de commande (1);
(4) à détecter lesdites vibrations propagées à partir de ladite première source (9) au niveau dudit point désigné (P1) après confirmation de l'efficacité desdites vibrations;
(5) à générer un second signal de commande après la détection desdites vibrations en provenance de ladite première source (9) au niveau dudit point désigné (P1);
(6) à déclencher la génération de vibrations en réponse audit second signal de commande au niveau d'une seconde source (10) sur ledit panneau de commande (1);
(7) à détecter lesdites vibrations propagées à partir de ladite seconde source (10) au niveau dudit point désigné (P1) après confirmation de l'efficacité desdites vibrations en provenance de ladite seconde source (10);
(8) à mesurer une première période de temps depuis le premier moment auquel des vibrations sont générées au niveau de ladite première source (9) jusqu'au second moment auquel lesdites vibrations générées audit premier moment sont détectées au niveau dudit point désigné (P1), et une seconde période de temps depuis le troisième moment auquel des vibrations sont générées au niveau de ladite seconde source (10) jusqu'au quatrième moment auquel lesdites vibrations générées audit troisième moment sont détectées au niveau dudit point désigné (P1);
(9) à calculer la position dudit point désigné (P1) sur la base de ladite première période de temps et de ladite seconde période de temps; et
(10) à entrer des données conformément à ladite position dudit point désigné,

dans lequel chacune desdites étapes de détection (4) et (7) comprend les étapes consistant: à détecter lesdites vibrations propagées à partir de chacune desdites première et seconde sources (9, 10), à délivrer en sortie un signal de détection qui indique que lesdites vibrations sont détectées, et à éliminer les vibrations qui ont une fréquence différente d'une fréquence prédéterminée.

6. Procédé selon la revendication 5, dans lequel ladite étape de calcul (9) comprend, en outre, les étapes consistant:

(11) à calculer une première distance entre ladite première source (9) et ledit point désigné (P1) sur la base de ladite première période de temps et de la vitesse de propagation dudit panneau de commande (1);
(12) à calculer une seconde distance entre ladite seconde source (10) et ledit point désigné (P1) sur la base de ladite seconde période de temps et de la vitesse de propagation dudit panneau de commande (1); et
(13) à calculer les coordonnées dudit point désigné (P1) sur la base de ladite première distance et de ladite seconde distance.

7. Appareil pour traiter l'image d'un original, comprenant:

un panneau de commande (1) sur lequel est placé l'original;
un premier générateur de vibrations (9), disposé sur le panneau de commande (1), pour déclencher la génération de vibrations en réponse à un premier signal de commande;
un second générateur de vibrations (10) pour déclencher la génération de vibrations en réponse à un second signal de commande, le second générateur de vibrations (10) étant disposé sur le panneau de commande (1) en un emplacement différent de l'emplacement où se situe le premier générateur de vibrations (9);
un moyen d'entrée (8) pour entrer un point sur le panneau de commande, le moyen d'entrée comprenant un moyen de détection (11) pour détecter les vibrations propagées à partir de chacun des premier et second générateurs de vibrations (9, 10);

un moyen de commande (21),

un moyen de mesure de temps (21) pour mesurer une première période de temps depuis un premier moment auquel le premier générateur de vibrations (9) génère des vibrations jusqu'à un second moment auquel les vibrations générées au premier moment par le premier générateur de vibrations (9) sont détectées, et une seconde période de temps depuis un troisième moment auquel le second générateur de vibrations (10) génère des vibrations jusqu'à un quatrième moment auquel les vibrations générées au troisième moment par le second générateur de vibrations (10) sont détectées,

un moyen de calcul (21) pour obtenir les valeurs de coordonnées du point entré sur la base de la première période de temps et de la seconde période de temps, et

un moyen de traitement (21) pour traiter une zone de l'image de l'original, la zone étant définie conformément aux valeurs de coordonnées du point entré sur le panneau de commande,

dans lequel le moyen de commande comprend un moyen pour confirmer l'efficacité des vibrations qui sont propagées à partir du premier générateur de vibrations (9) vers le moyen de détection (11), et commande le moyen de mesure de temps (21) pour déclencher la mesure de la première période de temps après confirmation de l'efficacité des vibrations, dans lequel:

ledit moyen d'entrée (8) comprend un commutateur (12),

ledit moyen de commande (21) fournit le premier signal de commande au premier générateur de vibrations (9) lorsque le commutateur (12) est activé, et fournit le second signal de commande au second générateur de vibrations (10) une fois que le moyen de détection (11) a détecté les vibrations en provenance du premier générateur de vibrations (9); et

ledit moyen de détection (11) comprend: une section de détection pour détecter lesdites vibrations propagées à partir de chacun desdits premier et second générateurs de vibrations (9, 10) et pour délivrer en sortie un signal de détection qui indique que lesdites vibrations sont détectées, et une section de filtrage (23), reliée à ladite section de détection, pour éliminer de façon sensible les vibrations qui ont une fréquence différente d'une fréquence prédéterminée.

8. Appareil selon la revendication 7, dans lequel le panneau de commande (1) est une table en verre transparent, et l'image de l'original à traiter est entrée dans le moyen de traitement (21) à l'aide d'une lumière qui est dirigée vers l'original et réfléchie par ce dernier.

9. Appareil selon la revendication 7 ou la revendication 8, dans lequel la zone de l'image à traiter est définie par l'entrée d'une multiplicité de points sur le panneau de commande (1), la multiplicité de points correspondant à des points contenus dans la zone.

10. Appareil selon la revendication 9, dans lequel le panneau de commande (1) comprend une première région sur laquelle est placée l'original et une seconde région qui est utilisée pour entrer une multiplicité de conditions de traitement par désignation d'un point, la zone de l'image à traiter est définie par le point entré lorsque le point entré appartient à la première région, et l'une des conditions de la multiplicité de conditions de traitement qui est sélectionnée conformément aux valeurs de coordonnées du point entré est entrée lorsque le point entré appartient à la seconde région.

11. Appareil selon la revendication 10, dans lequel la seconde région du panneau de commande (1) est une région périphérique de ce dernier, et la seconde région est divisée en une multiplicité de régions mineures dont chacune est affectée à une condition sélectionnée parmi la multiplicité de conditions de reproduction et la multiplicité de conditions de traitement.

12. Appareil selon la revendication 11, dans lequel le panneau de commande (1) a une forme rectangulaire et comporte quatre angles, le premier générateur de vibrations (9) et le second générateur de vibrations (10) étant disposés au niveau de deux angles différents parmi les quatre angles, les premier générateur de vibrations (9) et second générateur de vibrations (10) étant tous deux disposés au niveau d'un même côté.

13. Appareil selon la revendication 12, dans lequel le côté au niveau duquel sont disposés le premier générateur de vibrations (9) et le second générateur de vibrations (10) est adjacent à la seconde région uniquement.

14. Appareil selon la revendication 13, dans lequel l'emplacement au niveau duquel est disposé le premier générateur de vibrations (9) est l'origine des coordonnées.

Fig. 1

Fig. 2

# Fig. 3

$$(x-432)^2 + y^2 = r_2^2$$

$$x^2 + y^2 = r_1^2$$

$P_1 (X, Y)$

$r_2$

$r_1$

$P_2$

4

$A$
$(0,0)$

$B$
$(432,0)$
$(a,0)$

9

6

7

1

10

$Y$

$X$

Fig. 4

EP 0 560 260 B1

# Fig. 5

Fig. 6